# EUROPEAN PATENT APPLICATION

(11) **EP 4 407 590 A1**
(43) Date of publication of application: **31.07.2024**
(21) Application number: 22872666.7
(22) Date of filing: 01.09.2022
(51) Int. Cl.: G09F 3/04, B65D 23/00

(54) **RAW MATERIAL, FILM PACKAGE, AND CONTAINER**

(30) Priority: 24.09.2021 JP 2021155939
(71) Applicant: Fuji Seal International, Inc., Osaka-shi, Osaka 532-0003 (JP)
(72) Inventor: MIYAZAKI, Akira, Osaka-shi, Osaka 532-0003 (JP); MORITA, Kosuke, Osaka-shi, Osaka 532-0003 (JP); NAKANISHI, Masato, Osaka-shi, Osaka 532-0003 (JP); ODAGIRI, Shun, Osaka-shi, Osaka 532-0003 (JP)
(74) Representative: Graf von Stosch Patentanwaltsgesellschaft mbH
(86) International application number: PCT/JP2022/032955
(87) International publication number: WO 2023/047910

(57) **Abstract**

Both to release air present between a heat-shrinkable film and a container and ensure a favorable appearance of the heat-shrinkable film itself. In a rolled raw material (1) according to the present invention, an overlapping portion (120) of a heat-shrinkable film (101) includes an unsealed region (120b) and a sealed region (120a), and the unsealed region (120b) communicates an inner end (102) with an outer end (103) of the rolled raw material (1) in the overlapping portion (120).

## Description

### Technical Field

The present invention relates to a rolled raw material for obtaining a plurality of film packaging bodies by being cut into a size related to a container to be packaged, a film packaging body obtained by cutting the rolled raw material to a predetermined size, and a container packaged with the film packaging body.

### Background Art

As a film packaging body obtained by wrapping, in a tubular shape, a heat-shrinkable film around an article and then heat-shrinking the heat-shrinkable film to package the article, there is known in the related art, for example, a heat-shrinkable tubular label disclosed in Patent Document 1. This heat-shrinkable tubular label is mounted onto the article, and the heat-shrinkable label is heated to package the article.

### Citation List

### Patent Literature

Patent Document 1: JP 2020-76837 A

### Summary of Invention

### Technical Problem

In the heat-shrinkable tubular label in the related art, end portions of the heat-shrinkable film are overlapped, and the overlapped portions are bonded to each other in a band shape in an end portion direction of the heat-shrinkable film.

In the portion bonded in a band shape, currently solvent bonding is performed continuously in a band shape, from one end portion to the other end portion of the heat-shrinkable tubular label in a width direction, as illustrated in FIG. 1 of the Patent Document 1 described above.

A rolled raw material of the heat-shrinkable tubular label is typically a roll product obtained by forming a heat-shrinkable film having a band shape into a tubular shape and winding the formed heat-shrinkable film having a tubular shape (heat-shrinkable tubular label) into a roll shape downstream. Accordingly, if the overlapped portion of the end portions of the heat-shrinkable film is continuously solvent-bonded in a band shape, when the heat-shrinkable tubular label is wound, air inside the heat-shrinkable tubular label (hereinafter referred to as "tube interior") is not readily released, making it impossible to produce a pleasant roll product and resulting in the risk of wrinkles in the rolled raw material. In the case of a heat-shrinkable tubular label (hereinafter referred to as a film packaging body) cut out from a rolled raw material having wrinkles, the problem arises that a pleasant label cannot be achieved. Here, to release the air from the tube interior, conceivably a hole is formed in the rolled raw material, but then the film packaging body itself, cut out from the rolled raw material with the hole, has a poor appearance.

Even in a case in which wrinkles are not formed in the rolled raw material when the heat-shrinkable tubular label is wound, a pleasant film packaging body cannot be achieved with a film package cut from the rolled raw material. That is, when the film packaging body is mounted onto the container and heat-shrunk, air present between the container and the film packaging body attempts to escape from the tube interior to a tube exterior. However, because the overlapped portion of the end portions of the heat-shrinkable film is continuously solvent-bonded in a band shape, the escape of the air in the tube interior may be inhibited. As a result, air may remain between the container and the film packaging body after heat-shrinking. When air remains in this way, the appearance of the container is not favorable. To release the air remaining between the container and the film packaging body, conceivably a hole for air release is formed in the film packaging body itself. However, doing so makes the appearance of the film packaging body itself poor.

Thus, when the heat-shrinkable tubular label is wound into a roll shape, it is difficult to both release the air present in the tube interior and ensure the appearance of the film packaging body itself cut out from the rolled raw material, and to both release the air remaining between the container and the film packaging body and ensure the appearance of the film packaging body itself.

An object of an aspect according to the present invention is to realize a rolled raw material capable of both releasing air present in a tube interior and ensuring an appearance of a film packaging body itself cut out from the rolled raw material when a heat-shrinkable tubular label is wound into a roll shape, and to realize a film packaging body capable of both releasing air present between a container and the film packaging body and ensuring a favorable appearance of the film packaging body itself.

### Solution to Problem

To solve the problems described above, a rolled raw material according to a first aspect of the present invention is a rolled raw material for obtaining a plurality of film packaging bodies by being formed into a tubular shape by overlapping end portions of a heat-shrinkable film at an overlapping portion, and being cut into a size related to a container to be packaged. The overlapping portion of the heat-shrinkable film includes an unsealed region where the heat-shrinkable film is not sealed and a sealed region where the heat-shrinkable film is sealed. The unsealed region communicates a tube interior with a tube exterior of the rolled raw material in the overlapping portion.

According to the configuration described above, the unsealed region communicates the tube interior with the tube exterior of the rolled raw material of the film packaging body in the overlapping portion, and thus the air in the tube interior is released when the rolled raw material is wound into a roll shape. As a result, the rolled raw material is easier to wind and the occurrence of wrinkles is less likely. When the article is packaged with the film packaging body cut out from the rolled raw material free of wrinkles, the article can be packaged in a pleasant manner. Further, when the film packaging body for packaging the article is heat-shrunk, air between the article and the heat-shrinkable film can be reliably released to outside the heat-shrinkable film from the unsealed region of the overlapping portion. This makes it possible to improve the appearance after the article is packaged with the film packaging body. Further, there is no need to provide a hole in the rolled raw material for air release.

As a result, it is possible to realize a rolled raw material capable of both releasing air present in the tube interior and ensuring the appearance of the film packaging body itself cut out from the rolled raw material when the heat-shrinkable tubular label is wound into a roll shape, and to realize a film packaging body capable of both releasing air present between the film packaging body and the container and ensuring a favorable appearance of the film packaging body itself.

Further, according to a second aspect of the present invention, in the rolled raw material according to the first aspect, the sealed region and the unsealed region are alternately arranged in a circumferential direction in a state with the film packaging body mounted onto an article.

According to the configuration described above, the unsealed region is not continuously formed in the direction in which the heat-shrinkable film mainly shrinks (circumferential direction). That is, because the sealed region is definitely formed within the unsealed region in the circumferential direction, the unsealed region does not have a continuous shape in the direction coinciding with the direction in which the heat-shrinkable film mainly shrinks (circumferential direction). This makes it possible to reduce the possibility of wrinkle formation in the heat-shrinkable film in scenarios of shrinkage of a heat-shrinkable film, such as, for example, during ultrasonic sealing of the overlapping portion or during shrinkage of the heat-shrinkable film when packaging in a container. Furthermore, it is possible to reduce the possibility of the sealed region pealing due to shrinkage of the unsealed region during shrinkage of the heat-shrinkable film.

Further, according to a third aspect of the present invention, in the rolled raw material according to the second aspect, a plurality of the sealed regions are formed in the overlapping portion, and the unsealed region is formed into a substantially lattice shape, connecting spacing between the plurality of sealed regions.

According to the configuration described above, by forming the unsealed region into a lattice shape, it is possible to reliably release the air present between the heat-shrinkable film and the container.

Further, according to a fourth aspect of the present invention, in the rolled raw material according to the third aspect, each of the plurality of sealed regions is formed into the same shape as the other sealed region.

According to the configuration described above, the shapes of the plurality of sealed regions are the same, making it possible to make a force for sealing the heat-shrinkable films to each other uniform without bias in the overlapping portion. Accordingly, it is possible to reduce the possibility of peeling of the sealed regions.

Further, according to a fifth aspect of the present invention, in the rolled raw material according to any one of the first to fourth aspects, the sealed region is ultrasonically sealed.

According to the configuration described above, sealing is performed without using a solvent or an adhesive, and thus the following effects can be achieved. That is, because neither a solvent nor an adhesive is used, an environmental load is reduced. Furthermore, because neither a solvent nor an adhesive is used, the amount of material constituting the rolled raw material of the film packaging body is reduced, reducing the environmental load and facilitating recycling. In addition, when ultrasonic sealing is used, the sealed region can be easily formed into a desired shape at a desired position simply by changing the shape of an anvil roller. Further, when ultrasonic sealing is used, it is possible to accommodate high-speed manufacture of the rolled raw material as compared with a heat sealing method such as the use of a hot plate.

Further, a film packaging body according to a sixth aspect of the present invention is obtained by cutting the rolled raw material according to any one of the first to fifth aspects to a size related to a container to be packaged.

According to the configuration described above, as in the rolled raw material according to the first aspect of the present invention, it is possible to both release the air present between the film packaging body and the container and ensure a favorable appearance of the film packaging body itself.

Furthermore, a container according to a seventh aspect of the present invention is packaged with the film packaging body according to the sixth aspect.

According to the configuration described above, as in the film packaging body according to the sixth aspect of the present invention, it is possible to provide a container that both releases the air present between the film packaging body and the container and ensures a favorable appearance of the film packaging body itself. Advantageous Effects of Invention

According to an aspect of the present invention, it is possible to realize a rolled raw material capable of both releasing air present in a tube interior and ensuring an appearance of a film packaging body itself cut out from the rolled raw material when a heat-shrinkable tubular label is wound into a roll shape, and to provide a film packaging body capable of both releasing air present between a container and the film packaging body and ensuring a favorable appearance of the film packaging body itself.

### Brief Description of Drawings

FIG. 1 is a perspective view illustrating a schematic configuration of a rolled raw material according to the present embodiment.
FIG. 2 is a front view of an overlapping portion of the rolled raw material illustrated in FIG. 1.
FIG. 3 is a cross-sectional view taken along line AA of FIG. 2.
FIG. 4 is an explanatory view for explaining formation positions of a sealed region and an unsealed region in the overlapping portion illustrated in FIG. 2.
FIG. 5 is a schematic perspective view of a sealing device.
FIG. 6 is a schematic configuration diagram of an anvil unit included in the sealing device illustrated in FIG. 5.
FIG. 7 is a schematic configuration diagram of a projected portion formed on the anvil unit illustrated in FIG. 6.
FIG. 8 is an explanatory view of ultrasonic sealing.
FIG. 9 is an explanatory view for explaining packaging of a container with a film packaging body obtained from the rolled raw material illustrated in FIG. 1.
FIG. 10 is an explanatory view for explaining details of the overlapping portion of the film packaging body heat-shrunk and mounted onto the container.
FIG. 11 is a diagram illustrating an example of an anvil pattern of an overlapping portion.
FIG. 12 is a diagram illustrating another example of an anvil pattern of an overlapping portion.

### Description of Embodiments

Hereinafter, an embodiment of the present invention will be described with reference to the drawings. In the present embodiment, an example in which a rolled raw material according to the present invention is applied to a rolled raw material for obtaining a film packaging body having a tubular shape and configured to package an object to be packaged will be described. However, the following description is an example of the rolled raw material according to the present invention, and the technical scope of the present invention is not limited to the illustrated example.

### Overview of Rolled Raw Material

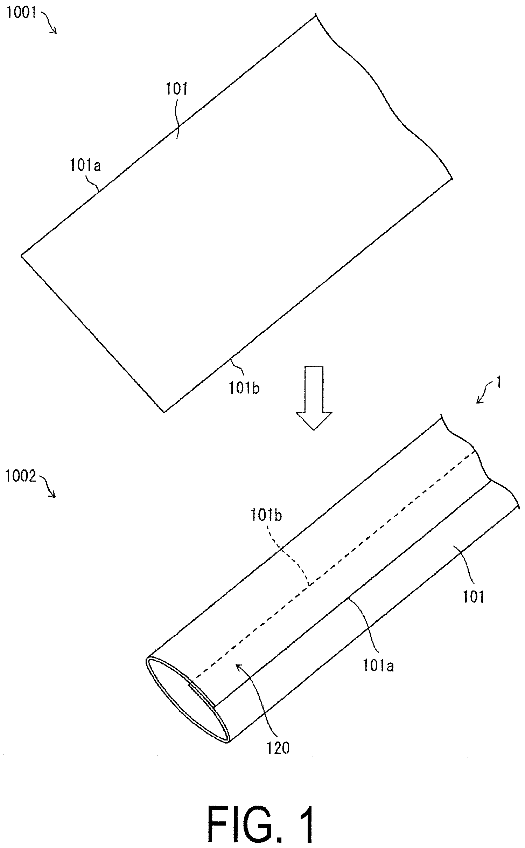

FIG. 1 illustrates a schematic configuration of a rolled raw material 1 according to the present embodiment, reference sign 1001 being a perspective view of a heat-shrinkable film 101 constituting the rolled raw material 1, and reference sign 1002 being a perspective view of the rolled raw material 1 obtained by overlapping end portions of the heat-shrinkable film 101.

The heat-shrinkable film 101, as indicated by reference sign 1001 in FIG. 1, is a rectangular shaped film and, for example, has flexibility and has heat shrinkability at least in a direction orthogonal to an extending direction of an overlapping portion 120 described below (a circumferential direction in a state in which the heat-shrinkable film 101 is formed into a tubular shape). As the heat-shrinkable film 101, a known film can be used. Here, heat shrinkability refers to a property of shrinking when heated to a predetermined temperature (for example, 70°C to 180°C).

Note that the heat-shrinkable film 101 may be transparent or may not be transparent (for example, milky white). Further, the heat-shrinkable film 101 may be a single layer or may have a structure in which a plurality of layers are layered. Further, a thickness of the heat-shrinkable film 101 is about 15 µm to 100 µm, but is not limited to this range.

Examples of the material of the heat-shrinkable film 101 include a resin composition containing, as a main component, one or a mixture of two or more types selected from polyester resins such as polyethylene terephthalate and polylactic acid, olefin resins such as polypropylene, polystyrene resins such as polystyrene, cyclic olefin resins, and thermoplastic resins such as vinyl chloride resins. The materials of the film base material described above are merely examples, and are not limited thereto.

A first end portion 101a that is one side edge portion of both side edge portions in a longitudinal direction of the heat-shrinkable film 101 and a second end portion 101b that is the other side edge portion of both side edge portions are overlapped as indicated by reference sign 1002 in FIG. 1, and the overlapping portion 120 obtained is sealed, thereby forming the rolled raw material 1 having a tubular shape. This rolled raw material 1 having a tubular shape is a rolled raw material for obtaining a plurality of film packaging bodies by being cut to a size related to a container (article) to be packaged.

### Description of Overlapping Portion

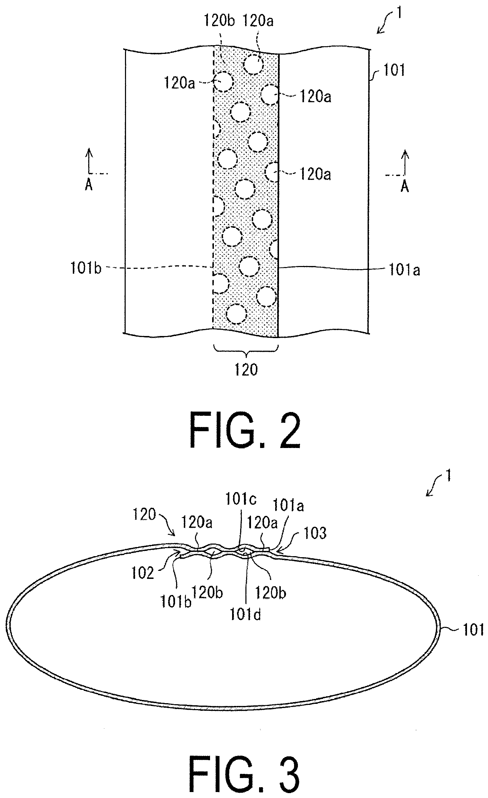

FIG. 2 is a front view of the overlapping portion 120 of the rolled raw material 1 illustrated in FIG. 1. FIG. 3 is a cross-sectional view taken along line AA of FIG. 2. The overlapping portion 120 of the rolled raw material 1 is not sealed across the entire surface, and includes sealed regions 120a in which the heat-shrinkable films 101 are sealed to each other and an unsealed region 120b in which the heat-shrinkable films 101 are not sealed to each other as illustrated in FIG. 2. Note that, in FIG. 2, the sealed region is a region within a circle indicated by a dashed line. For the sake of drawing clarity, not all sealed regions are denoted by the reference sign 120a. The unsealed region 120b is included in the overlapping portion 120, forming space in the overlapping portion 120. That is, the unsealed region 120b is space. This space communicates a tube interior with a tube exterior of the rolled raw material 1. This point will be described below.

As illustrated in FIG. 3, the unsealed region 120b is a region in which the surfaces of the first end portion 101a and the second end portion 101b facing each other are not sealed. That is, the unsealed region of the surfaces of a first facing surface 101c on the first end portion 101a side and a second facing surface 101d on the second end portion 101b side facing each other is the unsealed region 120b. Thus, the unsealed region 120b is a region where the first facing surface 101c and the second facing surface 101d are not bonded to each other, and air can be released therethrough. Then, the unsealed region 120b communicates an inner end 102 with an outer end 103 of the overlapping portion 120. That is, the unsealed region 120b communicates the tube interior with the tube exterior of the rolled raw material 1 in the overlapping portion 120.

With the unsealed region 120b communicating the tube interior with the tube exterior of the rolled raw material 1 in the overlapping portion 120, the following effects are achieved. For example, in the state of the rolled raw material 1 (state before heat shrinkage), the unsealed region 120b functions as an air vent hole, facilitating the winding of the rolled raw material 1. Furthermore, when the rolled raw material 1, in a state of being cut in accordance with a container to be packaged, is placed in a predetermined position on the container and the heat-shrinkable film 101 is heat-shrunk, the air between the container to be packaged and the heat-shrinkable film 101 can be reliably released from the unsealed region 120b of the overlapping portion 120 to outside the heat-shrinkable film 101.

The sealed region 120a in the overlapping portion 120 is ultrasonically sealed. Thus, in sealing using ultrasonic waves (ultrasonic sealing), the sealing is performed by generating frictional heat between the facing surfaces (the first facing surface 101c and the second facing surface 101d) of the heat-shrinkable film 101. Then, in the case of sealing using ultrasonic waves, sealing is performed without using a solvent or an adhesive, and thus the following effects are achieved. That is, because neither a solvent nor an adhesive is used, an environmental load is reduced. Furthermore, because neither a solvent nor an adhesive is used, the amount of material constituting the rolled raw material 1 of the film packaging body is reduced, reducing the environmental load and facilitating recycling. In addition, when ultrasonic sealing is used, the sealed region 120a can be easily formed into a desired shape at a desired position simply by changing a shape of an anvil roller. Furthermore, when ultrasonic sealing is used, it is possible to accommodate high-speed manufacture of the rolled raw material 1 as compared with a heat sealing method such as the use of a hot plate.

Furthermore, in ultrasonic sealing, because a solvent is not used to connect the heat-shrinkable films 101 to each other, it is possible to use the heat-shrinkable film 101 made of a material that does not dissolve in a solvent, increasing a degree of freedom of selection of the heat-shrinkable film 101 that can be used as the rolled raw material 1. Details of this ultrasonic sealing will be described below.

### Details of Sealed Region and Unsealed Region

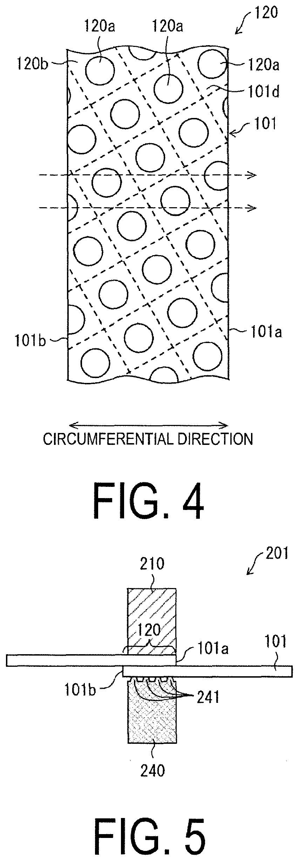

FIG. 4 is an explanatory view for explaining formation positions of the sealed region 120a and the unsealed region 120b in the overlapping portion 120. Note that, in FIG. 4, for convenience of description, the second facing surface 101d of the heat-shrinkable film 101 in the overlapping portion 120 is illustrated, and the first facing surface 101c (FIG. 3) is omitted.

In the overlapping portion 120, a plurality of the sealed regions 120a are formed, and the sealed regions 120a and the unsealed region 120b are alternately arranged in the circumferential direction, as illustrated in FIG. 4. Here, the circumferential direction is a direction in which a film packaging body obtained by cutting the rolled raw material 1 in accordance with a container to be packaged mainly shrinks in a state of being mounted onto the container. Here, because the film packaging body cut from the rolled raw material 1 has a cylindrical shape, the shrinkage of the film packaging body occurs not only in the circumferential direction but also in an axial direction. However, the shrinkage in the axial direction is slight, and thus the shrinkage direction is mainly in the circumferential direction. Thus, because the film packaging body is constituted by the heat-shrinkable film 101 and the member that actually shrinks is the heat-shrinkable film 101, hereinafter, the direction in which the film packaging body shrinks will be described as the direction in which the heat-shrinkable film 101 shrinks (shrinkage direction).

Preferably, the unsealed region 120b in the overlapping portion 120 does not coincide with either shrinkage direction (circumferential direction or axial direction) of the heat-shrinkable film 101. Therefore, a sealed region that breaks the continuity of the unsealed region 120b in the shrinkage direction needs to be present in the shrinkage direction of the heat-shrinkable film 101.

Here, with the direction in which the heat-shrinkable film 101 mainly shrinks being the circumferential direction, preferably the sealed regions 120a and the unsealed region 120b are alternately arranged in the circumferential direction indicated by the arrow illustrated in FIG. 4.

When the sealed regions 120a and the unsealed region 120b are arranged in the overlapping portion 120 as described above, the unsealed region 120b is not continuously formed from the second end portion 101b to the first end portion 101a in the circumferential direction. That is, the sealed region 120a is always formed in an area from the second end portion 101b to the first end portion 101a in the circumferential direction, and thus the unsealed region 120b does not have a continuous shape in the direction coinciding with the direction in which the heat-shrinkable film 101 mainly shrinks (circumferential direction). This makes it possible to reduce the possibility of wrinkle formation in the heat-shrinkable film 101 in scenarios of shrinkage of the heat-shrinkable film 101, such as, for example, during ultrasonic sealing of the overlapping portion 120 or during shrinkage of the heat-shrinkable film when packaging in a container. Furthermore, it is possible to reduce the possibility of the sealed region 120a pealing due to shrinkage of the unsealed region 120b during shrinkage of the heat-shrinkable film 101.

When an energy during the sealing of the heat-shrinkable film 101 is excessively high, a boundary between the sealed region 120a and the unsealed region 120b may be easily broken. In some cases, a so-called edge gap is likely to occur. When an edge gap occurs, if the sealed region 120a is continuous in the circumferential direction in the overlapping portion 120, the edge gap propagates from the second end portion 101b to the first end portion 101a, and significantly tears, impairing the appearance as a packaging body. However, as illustrated in FIG. 4, if the sealed region 120a is not formed from the second end portion 101b to the first end portion 101a in the circumferential direction, even if an edge gap occurs at the boundary between the sealed region 120a and the unsealed region 120b, the developed edge gap can be prevented from propagating from the second end portion 101b to the first end portion 101a. As a result, it is possible to suppress the occurrence of a tear that significantly impairs the appearance of the packaging body.

In the overlapping portion 120, the sealed regions 120a and the unsealed region 120b are not merely alternately arranged in the circumferential direction. That is, each sealed region 120a is formed into the same shape as the other sealed regions 120a and, as illustrated in FIG. 4, the unsealed region 120b is formed into a substantially lattice shape (a shape indicated by a dashed line in the drawing) by connecting spacing formed by the plurality of sealed regions 120a. In this way, by forming the unsealed region 120b into a lattice shape, it is possible to reliably release the air present between the heat-shrinkable film 101 and the container.

The sealed regions 120a illustrated in FIG. 4 have a substantially circular shape, but are not limited to the circular shape as long as the respective shapes are the same. Further, the shape of the sealed region 120a can be freely changed by changing the shape of the anvil roller of the sealing device. Here, if the shapes of the plurality of sealed regions 120a are the same (circular shape), it is possible to make a force for sealing the heat-shrinkable films 101 to each other uniform without bias in the overlapping portion 120. Accordingly, it is possible to reduce the possibility of the peeling of the sealed region 120a.

Note that the shapes of the sealed regions 120a need not be the same, and the sizes thereof need not be the same. For example, the shapes of the sealed regions 120a may be a mixture of squares and circles, and the sizes of the sealed regions 120a may be a mixture of different sizes.

### Description of Ultrasonic Sealing

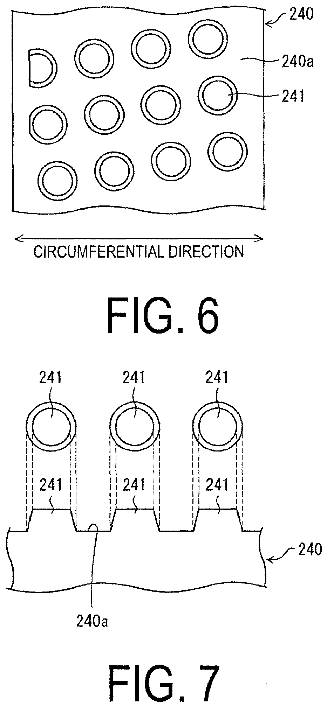

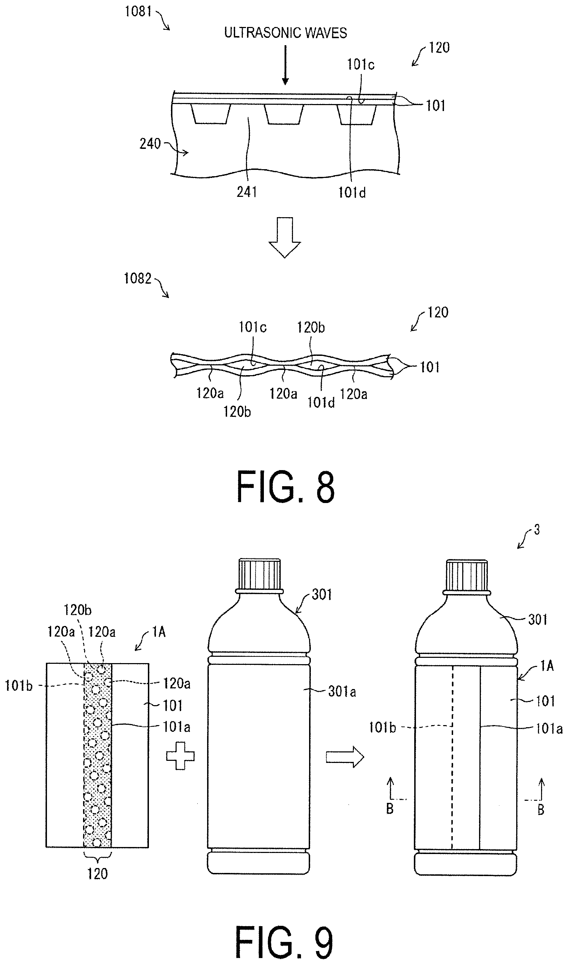

FIG. 5 is a schematic perspective view of a sealing device 201. FIG. 6 is a schematic configuration diagram of an anvil unit 240 included in the sealing device 201 illustrated in FIG. 5. FIG. 7 is a schematic configuration diagram of a projected portion 241 of the anvil unit 240. FIG. 8 is an explanatory view of ultrasonic sealing.

In the sealing device 201, as illustrated in FIG. 5, the overlapping portion 120 of the heat-shrinkable film 101 is interposed between an ultrasonic oscillation unit 210 and the anvil unit 240 including a plurality of the projected portions 241 formed thereon, whereby an appropriate pressure is applied and the ultrasonic waves oscillated by the ultrasonic oscillation unit 210 are transmitted to the overlapping portion 120. As a result, in the overlapping portion 120, the heat-shrinkable films 101 are thermally bonded to each other by frictional heat and sealed.

Here, the overlapping portion 120 is not sealed across the entire region thereof, and includes the sealed regions 120a in which the heat-shrinkable films 101 are sealed to each other and the unsealed region 120b in which the heat-shrinkable films 101 are not sealed to each other. That is, the plurality of projected portions 241 formed on the anvil unit 240 are brought into contact with the heat-shrinkable film 101 so that frictional heat is generated by the ultrasonic waves of the ultrasonic oscillation unit 210 only in the portions where the sealed regions 120a are to be formed.

As illustrated in FIG. 6, the plurality of projected portions 241 are formed on a front surface 240a of the anvil unit 240. As illustrated in FIG. 7, each projected portion 241 is formed into a truncated cone shape. Note that the shape of the projected portion 241 is not limited to the shape illustrated in FIG. 7, and may be a tubular shape, a rectangular parallelepiped shape, or the like as long as the portion facing the ultrasonic oscillation unit 210 is flat.

When sealing is performed in a state in which the overlapping portion 120 is interposed between the ultrasonic oscillation unit 210 and the anvil unit 240, the overlapping portion 120 is set between the ultrasonic oscillation unit 210 and the anvil unit 240 as indicated by reference sign 1081 in FIG. 8. At this time, the two heat-shrinkable films 101 in the overlapping portion 120 thus set are in a state in which the first facing surface 101c and the second facing surface 101d are in close contact with each other (not yet bonded).

Next, a predetermined pressure is applied to the overlapping portion 120 by the ultrasonic oscillation unit 210 and the anvil unit 240, and oscillation by the ultrasonic waves is applied to the heat-shrinkable film 101 from the ultrasonic oscillation unit 210. As a result, in the region of the heat-shrinkable films 101 interposed between the ultrasonic oscillation unit 210 and the projected portions 241, frictional heat is generated by the pressure and the oscillation by the ultrasonic waves. Due to this frictional heat, portions of the first facing surface 101c and the second facing surface 101d corresponding to the projected portions 241 are thermally bonded. Thus, when the ultrasonic treatment is implemented, the portions of the first facing surface 101c and the second facing surface 101d corresponding to the projected portions 241 are crushed while being melted by the frictional heat. Therefore, portions crushed and caused to protrude outward are not bonded and are closer to a recessed portion between the projected portions 241. As a result, as indicated by reference sign 1082 in FIG. 8, in the overlapping portion 120, the sealed regions 120a in which the first facing surface 101c and the second facing surface 101d are thermally bonded and the unsealed region 120b in which the first facing surface 101c and the second facing surface 101d are not thermally bonded are formed.

In this way, by the ultrasonic sealing by the sealing device 201, ultrasonic waves are applied while applying appropriate pressure to the heat-shrinkable film 101 in the overlapping portion 120, thereby heating and thermally bonding the overlapping portions (contacting portions) of the heat-shrinkable film 101 by frictional heat to form the sealed regions 120a. An appropriate pressure and a frequency of the ultrasonic waves in this case are not fixed values, but vary depending on conditions, such as the material and the thickness of the heat-shrinkable film 101.

Further, as illustrated in FIG. 6, in the anvil unit 240, the projected portions 241 are formed so that a region in which the projected portion 241 is not formed in the circumferential direction, that is, a region corresponding to the unsealed region 120b in the overlapping portion 120, is not continuous. By using the anvil unit 240 in which the projected portions 241 are formed in this manner, it is possible to form the unsealed region 120b in the overlapping portion 120 so as not to extend in a direction coinciding with the direction in which the heat-shrinkable film 101 mainly shrinks (circumferential direction).

### Packaging of Container

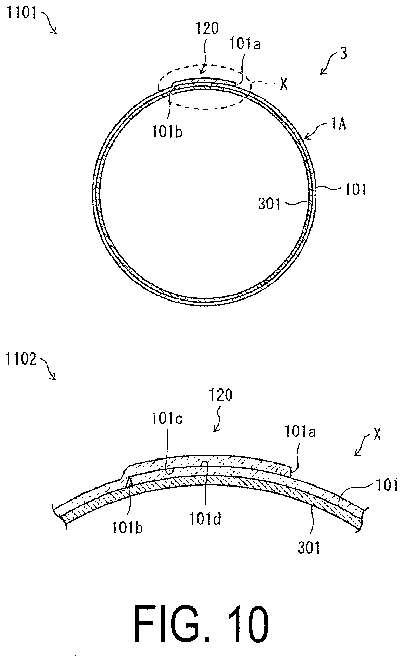

FIG. 9 is an explanatory view for explaining the packaging of a container with a film packaging body 1A obtained from the rolled raw material 1 illustrated in FIG. 1. FIG. 10 is a view for explaining details of the overlapping portion of the film packaging body 1A heat-shrunk and mounted onto the container.

As illustrated in FIG. 9, the film packaging body 1A packages a container 301 to be packaged. That is, the container 301 is packaged with the film packaging body 1A. The film packaging body 1A is obtained by cutting the rolled raw material 1 illustrated in FIG. 1 to a size related to the container 301. The film packaging body 1A functions as an article label by being wrapped onto a film mounting surface 301a of the container 301. Accordingly, the film packaging body 1A, in a state of being mounted onto the film mounting surface 301a of the container 301, is heat-shrunk, making it possible to form a label molded body 3 in which the article label is mounted onto the container 301.

The label molded body 3, as indicated by reference sign 1101 in FIG. 10, is mounted onto an outer peripheral surface of the container 301 by heat-shrinking the film packaging body 1A. The overlapping portion 120 of the film packaging body 1A in this state, as indicated by reference sign 1102 in FIG. 10, has a structure in which the first end portion 101a and the second end portion 101b of the heat-shrinkable film 101 are layered on the container 301.

The overlapping portion 120, before heat shrinkage, includes the sealed regions 120a sealed and the unsealed region 120b not sealed between the first facing surface 101c and the second facing surface 101d, as indicated by reference sign 1082 in FIG. 8. Then, by heat shrinkage, the space formed by the unsealed region 120b before heat shrinkage disappears after heat shrinkage, and the heat-shrinkable films 101 overlapped in the unsealed region 120b are air-tightly layered (state indicated by reference sign 1102 in FIG. 10). As a result, an adhesive strength of the overlapping portion 120 is higher after heat shrinkage than that before heat shrinkage.

Accordingly, in the label molded body 3, the air between the heat-shrinkable film 101 and the container 301 is appropriately released, making it possible to ensure a favorable appearance of the heat-shrinkable film 101 itself.

Note that the packaging target to be packaged with the film packaging body 1A is not limited to the container 301, and may be any object that can be packaged with the heat-shrinkable film 101.

An anvil pattern indicating the shape and a formation pattern of the sealed regions 120a in the overlapping portion 120 described above is a pattern in which the sealed regions 120a having a substantially circular shape are formed at predetermined intervals in the circumferential direction. That is, the anvil pattern in the overlapping portion 120 is a pattern in which the sealed regions 120a and the unsealed regions 120b are alternately arranged in the circumferential direction. However, the anvil pattern is not limited to the example of the overlapping portion 120, and the anvil patterns illustrated in the following first and second modified examples also achieve the same effects as the overlapping portion 120.

### First Modified Example

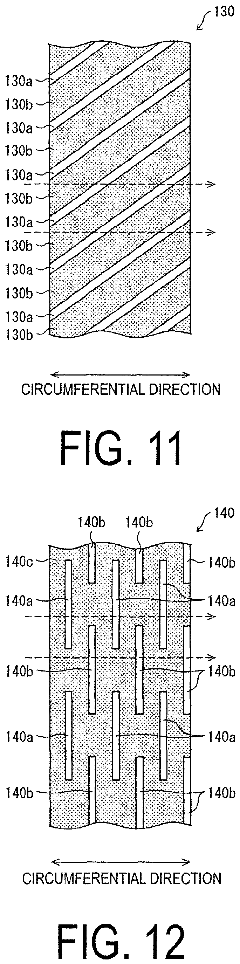

FIG. 11 illustrates an anvil pattern in an overlapping portion 130. As illustrated in FIG. 11, in the overlapping portion 130, a plurality of sealed regions 130a are formed, and each of the plurality of sealed regions 130a is formed in a linear shape extending in a direction intersecting the circumferential direction. Then, unsealed regions 130b are formed in linear shapes extending in a direction intersecting the circumferential direction in gap portions between the sealed regions 130a adjacent to each other.

The sealed regions 130a and the unsealed regions 130b in the overlapping portion 130 are alternately arranged in the circumferential direction in the same manner as the sealed regions 120a and the unsealed region 120b in the overlapping portion 120. That is, preferably the unsealed regions 130b in the overlapping portion 130 do not coincide with any shrinkage direction (circumferential direction or axial direction) of the heat-shrinkable film 101. Therefore, a sealed region that breaks the continuity of the unsealed region 130b in the shrinkage direction needs to be present in the shrinkage direction of the heat-shrinkable film 101.

Here, with the direction in which the heat-shrinkable film 101 mainly shrinks being the circumferential direction, the sealed regions 130a and the unsealed regions 130b are alternately arranged in the circumferential direction indicated by the arrow illustrated in FIG. 11. Therefore, in the overlapping portion 130 as well, as in the overlapping portion 120, the unsealed regions 130b are formed so as not to extend in a direction coinciding with the direction in which the heat-shrinkable film 101 mainly shrinks (circumferential direction).

In the overlapping portion 130 illustrated in FIG. 11, a width of the sealed region 130a is narrower than a width of the unsealed region 130b. However, no such limitation is intended. As long as the function of a seal is sufficient in the overlapping portion 130 and the air can be sufficiently released during heat-shrinking, the width of the sealed region 130a may be wider than the width of the unsealed region 130b, or the width of the sealed region 130a and the width of the unsealed region 130b may be the same.

Further, as long as the function of a seal is sufficient and the air can be sufficiently released during heat-shrinking, the spacing between the sealed regions 130a adjacent to each other may be equal or may not be equal.

Further, a quantity of the sealed regions 130a formed is also not particularly limited as long as the function of a seal in the overlapping portion 130 is sufficient and the air can be sufficiently released during heat-shrinking. Further, the direction in which the sealed regions 130a are formed is not particularly limited as long as the direction intersects the circumferential direction.

Furthermore, the sealed regions 130a adjacent to each other need not be parallel to each other. That is, the respective directions in which the sealed regions 130a are formed may be different. In this case, in consideration of the release of air in the overlapping portion 130, preferably the sealed regions 130a adjacent to each other are formed so as not to intersect at both edge portions of the overlapping portion 130 in the circumferential direction.

### Second Modified Example

FIG. 12 illustrates an anvil pattern of an overlapping portion 140. As illustrated in FIG. 12, in the overlapping portion 140, a plurality of first sealed regions 140a and a plurality of second sealed regions 140b are formed, and each of the first sealed regions 140a and the second sealed regions 140b is formed in a linear shape extending in a direction orthogonal to the circumferential direction. Then, the first sealed regions 140a and the second sealed regions 140b are adjacent to each other in the circumferential direction and formed so that positions related to both ends of the first sealed region 140a in the direction orthogonal to the circumferential direction differ from positions related to both ends of the second sealed region 140b adjacent to the first sealed region 140a in the direction orthogonal to the circumferential direction and from the direction orthogonal to the circumferential direction. Note that preferably the first end portion 101a of the heat-shrinkable film 101 in the overlapping portion 140 is intermittently sealed. This is because the first end portion 101a does not rise after shrinkage. Therefore, in FIG. 12, the second sealed regions 140b are intermittently formed at positions corresponding to the first end portion 101a of the heat-shrinkable film 101 in the overlapping portion 140 (right side of FIG. 12). When the arrangement of the first sealed regions 140a and the second sealed regions 140b is opposite to that illustrated in FIG. 12, the first sealed regions 140a are intermittently formed at positions corresponding to the first end portion 101a of the heat-shrinkable film 101 in the overlapping portion 140.

The first sealed regions 140a, the second sealed regions 140b, and unsealed region 140c in the overlapping portion 140 are alternately arranged in the circumferential direction, as with the sealed regions 120a and the unsealed region 120b of the overlapping portion 120. That is, preferably the unsealed region 140c in the overlapping portion 140 does not coincide with any shrinkage direction of the heat-shrinkable film 101 (circumferential direction or axial direction). Therefore, a sealed region that breaks the continuity of the unsealed region 140c in the shrinkage direction needs to be present in the shrinkage direction of the heat-shrinkable film 101.

Here, with the direction in which the heat-shrinkable film 101 mainly shrinks being the circumferential direction, the first sealed regions 140a and the unsealed region 140c, and the second sealed regions 140b and the unsealed region 140c, are alternately arranged in the circumferential direction indicated by the arrow illustrated in FIG. 12. Therefore, in the overlapping portion 140 as well, as with the overlapping portion 120, the unsealed region 140c is formed so as not to extend in a direction coinciding with the direction in which the heat-shrinkable film 101 mainly shrinks (circumferential direction).

In the overlapping portion 140 illustrated in FIG. 12, the first sealed regions 140a and the second sealed regions 140b have substantially the same shape, but the shape is not limited thereto. For example, a width of the first sealed region 140a may be wider or narrower than a width of the second sealed region 140b. Further, a length of the first sealed region 140a may be longer or shorter than a length of the second sealed region 140b. Furthermore, sizes of the first sealed regions 140a do not need to be the same, and sizes of the second sealed regions 140b do not need to be the same. The widths and the lengths of the first sealed region 140a and the second sealed region 140b may be any width and length as long as the function of the seal in the overlapping portion 140 is sufficient and the air can be sufficiently released during heat-shrinking.

Furthermore, quantities of the first sealed region 140a and the second sealed region 140b formed are not particularly limited as long as the function of the seal in the overlapping portion 140 is sufficient and the air can be sufficiently released during heat-shrinking.

The present invention is not limited to the embodiments described above, and various changes can be made within the scope of the claims. Embodiments obtained by appropriately combining technical means disclosed in different embodiments are also included in the technical scope of the present invention.

### Reference Signs List

1 Rolled raw material
1A Film packaging body
3 Label molded body
101 Heat-shrinkable film
101a First end portion
101b Second end portion
101c First facing surface
101d Second facing surface
102 Inner end
103 Outer end
120, 130, 140 Overlapping portion
120a, 130a Sealed region
120b, 130b, 140c Unsealed region
140a First sealed region
140b Second sealed region
201 Sealing device
210 Ultrasonic oscillation unit
240 Anvil unit
301 Container

## Claims

1. A rolled raw material for obtaining a plurality of film packaging bodies by being formed into a tubular shape by overlapping end portions of a heat-shrinkable film at an overlapping portion, and being cut into a size related to a container to be packaged, wherein
the overlapping portion of the heat-shrinkable film includes
an unsealed region where the heat-shrinkable film is not sealed, and
a sealed region where the heat-shrinkable film is sealed, and
the unsealed region communicates a tube interior with a tube exterior of the rolled raw material in the overlapping portion.

2. The rolled raw material according to claim 1, wherein
the sealed region and the unsealed region are alternately arranged in a circumferential direction in a state with the film packaging body mounted onto an article.

3. The rolled raw material according to claim 2, wherein
a plurality of the sealed regions are formed in the overlapping portion, and
the unsealed region is formed into a substantially lattice shape, connecting spacing between the plurality of the sealed regions.

4. The rolled raw material according to claim 3, wherein
each of the plurality of the sealed regions is formed into the same shape as the other sealed region.

5. The rolled raw material according to any one of claims 1 to 4, wherein
the sealed region is ultrasonically sealed.

6. A film packaging body obtained by cutting the rolled raw material according to any one of claims 1 to 5 to a size related to a container to be packaged.

7. A container packaged with the film packaging body according to claim 6.
